# EUROPEAN PATENT SPECIFICATION

(11) **EP 2 841 735 B1**
(45) Date of publication and mention of the grant of the patent: **21.08.2019**
(21) Application number: 13725826.5
(22) Date of filing: 23.04.2013
(51) Int. Cl.: F01P 11/10, F04D 29/52

(54) **SHROUD**
VERKLEIDUNG
CARTER

(30) Priority: 26.04.2012 IT BO20120230
(43) Date of publication of application: 04.03.2015
(73) Proprietor: SPAL Automotive S.r.l., 42015 Correggio (IT)
(72) Inventor: SPAGGIARI, Alessandro, I-42015 Correggio (IT)
(74) Representative: Puggioli, Tommaso
(86) International application number: PCT/IB2013/053209
(87) International publication number: WO 2013/160832

(56) References cited:
- EP-A1- 2 020 327
- DE-U1-202011 003 858
- JP-A- 2008 286 113
- JP-U- 61 167 421
- KR-A- 20090 027 305
- US-A- 6 106 228

## Description

### Technical field

This invention relates to a shroud and, in particular, a shroud for a motor vehicle engine cooling system.

### Background art

Motor vehicle engine cooling systems comprise a radiator and a ventilator, usually of the axial type, designed to channel a cooling air flow against the radiator.

Ventilators are defined by an electric motor whose output shaft is integral with a fan comprising a hub for connection to the shaft and a plurality of blades which project from the hub.

A shroud, usually made by moulding a plastic material, is provided to support the ventilator motor and to house the fan at least partly so as to optimize heat removal by the radiator.

Shrouds usually comprise a main body or frame which has a main circular opening delimited by a cylindrical wall for the passage of a cooling air flow. At that opening, the frame comprises a ring for mounting the motor of the ventilator which is supported by a plurality of arms which project from the cylindrical wall towards the inside of the opening itself.

The mounting ring is coaxial with the cylindrical wall and the motor is mounted coaxially with the mounting ring.

In some embodiments relevant to this specification, the frame has a plurality of secondary openings, each provided with a panel by which it is closed and which is connected by a hinge to the frame at the respective opening.

In use, as the speed of the vehicle increases (and exceeds approximately 80 kph), the panels are free to open to facilitate the passage of air through the secondary openings.

In practice, at low speeds or when the vehicle is stationary, the cooling air flow is produced by the fan and passes through the main opening, whereas when the speed of the vehicle increases, the cooling air flow is produced by vehicle motion and passes through all the openings of the shroud.

In prior art solutions, the hinge connection is defined by a pair of coaxial pins which are aligned along a direction transversal to the shaft of the electric motor and which project from the perimeter of the respective opening towards the inside of the opening.

Each of the panels has a pair of hooks and each hook is designed to engage a corresponding pin to define the aforementioned hinge.

Shrouds made in this way have some disadvantages.

The moulding production process may result in material shrinkage which may in turn lead to the pins of a secondary opening not being coaxial. Moreover, the portion of the frame where the secondary openings are made is not necessarily flat and this leads to further difficulties in obtaining coaxial pins.

Axial misalignment of the pins implies difficulties in hooking the panels to them during assembly and, even when the panels are hooked to the pins, causes resistance to panel rotation.

The resistance caused by non-coaxial pins may be such that the panel does not open or opens only partly, making it more difficult to cool the radiator.

Shroud with pivotably mounted flaps are known from JP 2008 286113, DE 20 2011 003858 U1, JP 61 167421 U, KR 2009 0027305, EP 2 020 327 or US 6 106 228.

### Disclosure of the invention

In this context, the main purpose of the present invention is to propose a shroud which is free of the above mentioned disadvantages.

The aim of this invention is to provide a shroud in which the panels can be easily assembled to the frame.

Another aim of the invention is to provide a shroud where the panels for closing the secondary openings are free to move, as a function of vehicle speed, between the closed position and the open position.

The above mentioned purpose and aims are substantially achieved by a shroud having the features described in the independent claim 1.

### Brief description of drawings

Further features and advantages of the invention are more apparent in the detailed description below, with reference to a preferred, non-limiting, embodiment of a shroud as illustrated in the accompanying drawings, in which:
- Figure 1 is a schematic front perspective view of a shroud according to this invention;
- Figure 2 illustrates the shroud of Figure 1 in a schematic rear perspective view;
- Figure 3 is a schematic rear perspective view showing a detail of the shroud of Figures 1 and 2 in a second operating configuration;
- Figure 4 is a schematic front face view of the detail of Figure 3.

### Detailed description of preferred embodiments of the invention

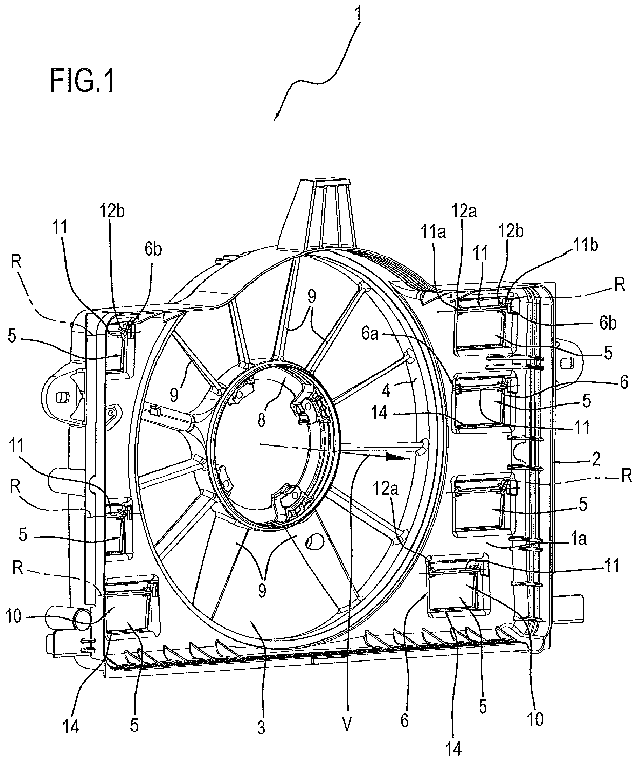

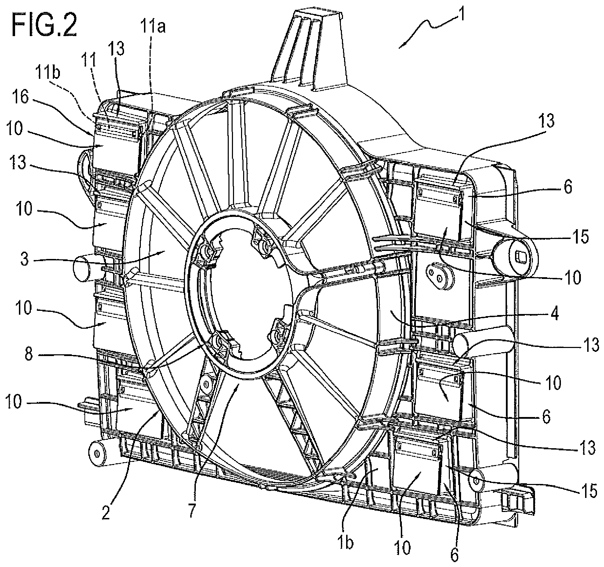

With reference to Figures 1 and 2, the numeral 1 denotes a shroud according to this invention.

The shroud 1, which has a front face 1a and a rear face 1b, comprises a frame 2 with a main opening 3 delimited by a main wall 4, preferably cylindrical, and at least one secondary opening 5, delimited by a secondary wall 6, for the passage of a cooling air flow.

In the example illustrated, the shroud 1 has seven secondary openings 6 which, for the purposes of this invention, can be considered substantially coplanar with the main opening 3.

The shroud 1 comprises a mounting system 7 for a ventilator, not illustrated, associated with the frame 2 and designed to support the ventilator at the main opening 4.

In the embodiment illustrated, the mounting system 7 comprises a ventilator mounting ring 8 which is coaxial with the main wall 4.

The mounting system 7 comprises a plurality of arms 9 which extend from the main wall 4 to the mounting ring 8 to support the mounting ring 8 itself. The shroud 1 comprises, for each secondary opening 5, a respective panel 10 for closing the same.

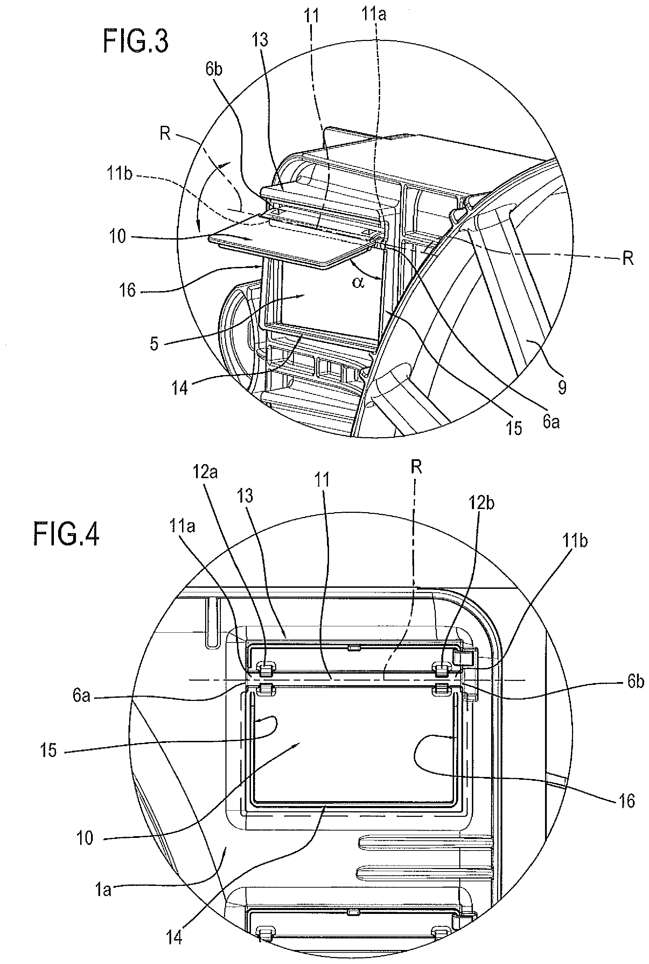

For simplicity of description, with reference in particular to Figures 3 and 4, described below are one panel 10 and the corresponding secondary opening 5 since all the distinct panel and opening combinations of the shroud are substantially identical.

The panel 10 is connected to the frame 2 rotatably about an axis R and is movable between a lowered position, illustrated in Figures 1 and 2, and a raised position, illustrated in Figure 3.

In the lowered position, the panel 10 closes the corresponding secondary opening 5 whilst in the raised position, it allows a component of the cooling flow to pass through the secondary opening 5 itself.

It should be noted that the opening angle of the panel 10 depends on the speed of the vehicle the shroud 1 is installed in.

More specifically, in use, the shroud 1 is mounted in such a way that its front face 1a is directed forwards in the direction V of vehicle movement.

The air or pressure created by the forward movement of the vehicle, when it exceeds a predetermined threshold, lifts the panels 10 to the raised position, whereas, when the speed decreases, the force of gravity closes them by causing them to return to the lowered position.

To enable the panel 10 to rotate between the raised and lowered positions, the shroud 1 comprises hinge means, which define the axis of rotation R and which operate between the frame 2 and the panel 10.

The hinge means comprise a pin 11 extending through the secondary opening 5 and having a first and a second end 11a, 11b respectively connected to a first and a second section 6a, 6b of the secondary wall 6 on opposite sides of the pin 11.

In the preferred embodiment, the pins 11 are made as one with the frame 2, in particular during moulding.

The pin 11 extends in a direction transversal to the direction of forward movement V in such a way that the motion of the vehicle generates a pressure which lifts the panel.

The panel 10, on the other hand, is equipped with a pair of hooks 12a, 12b designed to grip the pin 11 idly.

In practice, the hinge means comprise first engagement means, embodied by way of an example by the pin 11 and associated with the frame 2, and second engagement means, for example the hooks 12a, 12b, associated with the panel 10, which are connectable to each other to define a hinge connection.

In other words, the shroud 1 comprises, for each secondary opening 5, a single pin 11 which extends between two opposite sections or portions 6a, 6b of the secondary wail 6 and which defines the axis of rotation R about which the panel 10 moves.

The use of a single pin 11 which defines the axis of rotation of the respective panel 10 guarantees that the panel is easy to hook onto the pin.

Moreover, the panel can rotate freely and easily according to the speed of the vehicle.

Advantageously, to guarantee that the panel 10 closes under the force of gravity, as mentioned above, the pin 11 is substantially horizontal, in particular considering a shroud 1 installed in a vehicle.

Looking in more detail at the preferred embodiment illustrated, it may be observed that the secondary wall 6 comprises an upper edge 13, a lower edge 14 and a first and second lateral edges 15, 16 and, in particular, is substantially rectangular in shape.

The pin 11 extends between the lateral edges 15 and 16, its first end 11a being integral with the edge 15 and its second end 11b integral with the edge 16.

Further, in the example illustrated, the pin 11 is parallel to the upper and lower edges 13, 14 of the secondary wall 6.

Moreover, in the preferred embodiment illustrated, it may be observed that the pin 11 is slightly offset towards the upper edge 13 and thus slightly further from the lower edge 14, so that most of the weight of the panel 10 contributes to closing it when the speed decreases.

With reference to Figure 1, it may be observed that the hooks 12a, 12b are preferably spaced on the panel 10.

The hooks 12a, 12b are preferably positioned on the panel 10 in such a way as to engage the pin 11 substantially at the ends of it 11 a, 11b.

The use of a single pin guarantees a single axis of rotation for the entire panel which allows the largest possible opening under dynamic conditions, that is to say, due to the motion of the vehicle.

## Claims

1. A shroud comprising
a frame (2) with a main opening (3) delimited by a main wall (4) and at least one secondary opening (5), delimited by a secondary wall (6), for the passage of a cooling air flow,
a ventilator mounting system (7) associated with the frame (2) to support the ventilator at the main opening (3),
a panel (10) for closing the secondary opening (5), connected to the frame (2) and movable, by rotation, between a lowered position and a raised position,
hinge means which operate between the frame (2) and the panel (10) to allow rotation of the panel (10) between the raised and lowered positions, the hinge means being defined by first engagement means associated with the frame (2) and second engagement means associated with the panel (10),
the shroud being **characterized in that** the first engagement means comprise a single pin (11) which defines the axis of rotation (R) of the hinge means, extends through the secondary opening (5) and has a first and a second end (11a, 11b) respectively connected to a first and a second section (6a, 6b) of the secondary wall (6), opposite each other, the second engagement means being connectable to the single pin (11).

2. The shroud according to claim 1, **characterized in that** the single pin (11) is substantially straight.

3. The shroud according to claim 1 or 2, **characterized in that** the single pin (11) is substantially horizontal.

4. The shroud according to any of the preceding claims, **characterized in that** the frame (2) and the single pin (11) are made as a single part.

5. The shroud according to any of the preceding claims, **characterized in that** the secondary wall (6) comprises an upper edge (13), a lower edge (14) and a first and second lateral edges (15, 16), the first and second lateral edges (15, 16) connecting the upper edge (13) to the lower edge (14), the secondary wall (6) being substantially rectangular and the single pin (11) extending between the first and second lateral edges (15, 16).

6. The shroud according to claim 5, **characterized in that** the single pin (11) has a first end (11a) integral with the first lateral edge (15) and a second end (11b) integral with the second lateral edge (16).

7. The shroud according to any of the preceding claims, **characterized in that** the second engagement means comprise a first and a second hook (12a, 12b) integral with the panel (10) and located on the panel (10) in such a way as to engage the single pin (11) substantially at a first and a second end (11a, 11b) of the single pin (11)

8. The shroud according to any of the preceding claims, **characterized in that** the main wall (4) is substantially cylindrical in shape, the mounting system (7) comprising
a ventilator mounting ring (8) located in the main opening (3) and coaxial with the main wall (4),
a plurality of arms (9) which extend from the main wall (4) to the mounting ring (8) to support the mounting ring (8) and the ventilator.

## Patentansprüche

1. Verkleidung, umfassend:
einen Rahmen (2) mit einer Hauptöffnung (3), begrenzt durch eine Hauptwand (4), und mindestens einer Hilfsöffnung (5), begrenzt durch eine Hilfswand (6), für das Durchströmen einer Kühlluftströmung;
ein Ventilatormontagesystem (7), assoziiert mit dem Rahmen (2), um den Ventilator an der Hauptöffnung (3) zu tragen;
eine Platte (10) zum Verschließen der Hilfsöffnung (5), verbunden mit dem Rahmen (2) und durch Drehung bewegbar zwischen einer abgesenkten Position und einer angehobenen Position;
Scharniermittel, die zwischen dem Rahmen (2) und der Platte (10) arbeiten, um die Drehung der Platte (10) zwischen der angehobenen und der abgesenkten Position zu erlauben, wobei die Scharniermittel durch erste Eingriffsmittel, die mit dem Rahmen (2) assoziiert sind, und zweite Eingriffsmittel, die mit der Platte (10) assoziiert sind, definiert sind,
wobei die Verkleidung **dadurch gekennzeichnet ist, dass** die ersten Eingriffsmittel einen einzelnen Zapfen (11) umfassen, der die Rotationsachse (R) der Eingriffsmittel definiert, sich durch die Hilfsöffnung (5) erstreckt und ein erstes und ein zweites Ende (11a, 11b) aufweist, die jeweils mit einem ersten und einem zweiten Abschnitt (6a, 6b) der Hilfswand (6) verbunden und gegenständig angeordnet sind, wobei die zweiten Eingriffsmittel mit dem einzelnen Zapfen (11) verbunden werden können.

2. Verkleidung nach Anspruch 1, **dadurch gekennzeichnet, dass** der einzelne Zapfen (11) im Wesentlichen gerade ist.

3. Verkleidung nach Anspruch 1 oder 2, **dadurch gekennzeichnet, dass** der einzelne Zapfen (11) im Wesentlichen horizontal ist.

4. Verkleidung nach einem der vorhergehenden Ansprüche, **dadurch gekennzeichnet, dass** der Rahmen (2) und der einzelne Zapfen (11) in einem Stück gefertigt sind.

5. Verkleidung nach einem der vorhergehenden Ansprüche, **dadurch gekennzeichnet, dass** die Hilfswand (6) eine obere Kante (13), eine untere Kante (14) und eine erste und eine zweite Seitenkante (15, 16) umfasst, wobei die erste und die zweite Seitenkante (15, 16) das obere Ende (13) mit dem unteren Ende (14) verbinden, wobei die Hilfswand (6) im Wesentlichen rechteckig ist und der einzelne Zapfen (11) sich zwischen der ersten und der zweiten Seitenkante (15, 16) erstreckt.

6. Verkleidung nach Anspruch 5, **dadurch gekennzeichnet, dass** der einzelne Zapfen (11) ein erstes Ende (11a), das fest mit der ersten Seitenkante (15) verbunden ist, und ein zweites Ende (11b) aufweist, das fest mit der zweiten Seitenkante (16) verbunden ist.

7. Verkleidung nach einem der vorhergehenden Ansprüche, **dadurch gekennzeichnet, dass** die zweiten Eingriffsmittel einen ersten und einen zweiten Haken (12a, 12b) umfassen, die fest mit der Platte (10) verbunden und auf der Platte (10) angeordnet sind, sodass sie mit dem einzelnen Zapfen (11) im Wesentlichen an einem ersten und einem zweiten Ende (11a, 11b) des einzelnen Zapfens (11) in Eingriff gelangen.

8. Verkleidung nach einem der vorhergehenden Ansprüche, **dadurch gekennzeichnet, dass** die Hauptwand (4) im Wesentlichen eine zylindrische Form aufweist, wobei das Montagesystem (7) einen Ventilatormontagering (8) umfasst, der in der Hauptöffnung (3) und koaxial zur Hauptwand (4) angeordnet ist,
sowie eine Vielzahl an Armen (9), die sich von der Hauptwand (4) zum Montagering (8) erstrecken, um den Montagering (8) und den Ventilator zu tragen.

## Revendications

1. Carter comprenant :
un châssis (2) doté d'une ouverture principale (3) délimitée par une cloison principale (4) et au moins une ouverture secondaire (5), délimitée par une cloison secondaire (6), pour le passage d'un flux d'air de refroidissement,
un système de montage (7) de ventilateur associé au châssis (2) pour supporter le ventilateur en correspondance de l'ouverture principale (3),
un panneau (10), pour fermer l'ouverture secondaire (5), relié au châssis (2) et mobile, en rotation, entre une position abaissée et une position surélevée,
des moyens à charnière agissant entre le châssis (2) et le panneau (10) pour permettre la rotation du panneau (10) entre les positions abaissée et surélevée, les moyens à charnière étant définis par des premiers moyens de mise en prise associés au châssis (2) et des seconds moyens de mise en prise associés au panneau (10),
le carter étant **caractérisé en ce que** les premiers moyens de mise en prise comprennent une cheville unique (11), définissant l'axe de rotation (R) des moyens à charnière, se prolongeant à travers l'ouverture secondaire (5) et comportant une première et une seconde extrémité (11a, 11b) respectivement reliées à une première et une seconde section (6a, 6b) de la cloison secondaire (6), opposées l'une à l'autre, les seconds moyens de mise en prise étant reliés à la cheville unique (11).

2. Carter selon la revendication 1, **caractérisé en ce que** la cheville unique (11) est substantiellement rectiligne.

3. Carter selon la revendication 1 ou 2, **caractérisé en ce que** la cheville unique (11) est substantiellement horizontale.

4. Carter selon l'une quelconque des revendications précédentes, **caractérisé en ce que** le châssis (2) et la cheville unique (11) sont réalisés en une seule partie.

5. Carter selon l'une quelconque des revendications précédentes, **caractérisé en ce que** la cloison secondaire (6) comprend un bord supérieur (13), un bord inférieur (14) et des premier et second bords latéraux (15, 16), les premier et second bords latéraux (15, 16) reliant le bord supérieur (13) au bord inférieur (14), la cloison secondaire (6) étant substantiellement rectangulaire et la cheville unique (11) se prolongeant entre les premier et second bords latéraux (15, 16).

6. Carter selon la revendication 5, **caractérisé en ce que** la cheville unique (11) comporte une première extrémité (11a) solidaire du premier bord latéral (15) et une seconde extrémité (11b) solidaire du second bord latéral (16).

7. Carter selon l'une quelconque des revendications précédentes, **caractérisé en ce que** les seconds moyens de mise en prise comprennent un premier et un second crochet (12a, 12b) solidaires du panneau (10) et situés sur le panneau (10) de manière à se mettre en prise avec la cheville unique (11) substantiellement en correspondance d'une première et d'une seconde extrémité (11a, 11b) de la cheville unique (11).

8. Carter selon l'une quelconque des revendications précédentes, **caractérisé en ce que** la cloison principale (4) a une forme substantiellement cylindrique, le système de montage (7) comprenant une bague de montage (8) du ventilateur située dans l'ouverture principale (3) et coaxiale à la cloison principale (4),
et une pluralité de bras (9) se prolongeant de la cloison principale (4) vers la bague de montage (8) pour supporter la bague de montage (8) et le ventilateur.
